# DEMANDE DE BREVET EUROPEEN

(11) **EP 0 668 208 A1**
(43) Date de publication de la demande: **23.08.1995**
(21) Numéro de dépôt: 94200444.1
(22) Date de dépôt: 22.02.1994
(51) Int. Cl.: B62J 1/08

(54) **Selle de bicyclette**

(71) Demandeur: SELLE SAN MARCO DI GIRARDI COMM. LUIGI S.p.A., I-36028 Rossano Veneto Vicenza (IT)
(72) Inventeur: Antonio, Girardi, I-36028 Rossano Veneto (Vicenza) (IT)
(74) Mandataire: Bettello, Luigi, Dott. Ing.

(57) **Abrégé**

La carcasse (1) de la selle comporte dans sa partie inférieure deux tronçons rectilignes (2, 3), préférablement à section circulaire, qui sont pincés par les mors (4, 5) de la mâchoire, lesquels mors sont assemblés l'un à l'autre et à la tête (6) du tube de selle (7) au moyen de la vis (8), avantageusement à tête à six pans creux (9). La fixation de la carcasse (1) sur le tube (7) est ainsi simplifiée tout en conservant la possibilité de réglage de la position longitudinale de la selle à l'horizontale comme celui de son inclinaison, et ce moyennant la seule manoeuvre de la vis (8).

## Description

La présente invention a pour objet la réalisation de la selle de bicyclette qui est définie à la revendication 1.

L'originalité de cette selle réside dans la structure particulière de sa carcasse, en vue de la fixation directe de celle-ci sur le tube de selle, en permettant en outre l'élimination du bâti-fourchette usuel prévu dans les selles traditionnelles.

Il convient d'observer que l'invention peut être appliquée aux selles normales de cyclotourisme qui sont à l'heure actuelle munies d'un bâti, avec ou sans ressort.

On comprend sans peine l'avantage considérable de pouvoir appliquer l'invention aux selles de course, par suite notamment de la réduction substantielle du poids de l'ensemble et la diminution du nombre des pièces impliquées dans l'assemblage de la selle. On obtient de la sorte une très sensible simplification du montage de la sel le, ainsi que du réglage de sa position sur le cadre par l'utilisateur.

Il s'agit en fait d'une conception nouvelle du dispositif qui assure la fixation de la selle sur la tube de selle et la liaison opérée entre ces deux éléments.

Ces avantages sont obtenus en modifiant de manière sensible la structure de la carcasse de la selle, de manière à faire comporter à la partie inférieure de celle-ci deux tronçons rectilignes à profil cylindrique, tournés vers l'intérieur et propres à être directement serrés entre les mors de la mâchoire oscillante montée sur le tube de selle.

Une autre caractéristique originale de l'invention porte sur la vis unique, susceptible d'être facilement manoeuvrée par l'utilisateur et qui, dans un mode de réalisation particulier, reste invisible de l'extérieur, ladite vis ayant pour fonction d'immobiliser la mâchoire portesel le sur le tube-support, en assurant simultanément la solidarisation des tronçons rectilignes inférieurs et de la mâchoire précitée.

De cette manière on a la possibilité de régler la selle aussi bien en inclinaison par rapport au tube de sel le qu'en position longitudinale sur le cadre, en fonction des desiderata de l'utilisateur.

L'invention permet encore d'éliminer les ressorts normalement prévus à l'arrière pour supporter la selle, la conformation particulière de celle-ci permettant de lui conférer une élasticité suffisante aussi bien pour les bicyclettes de cyclotourisme que pour celles de course.

Le dessin annexé, donné à titre d'exemple, permettra de mieux comprendre l'invention, les caractéristiques qu'elle présente et les avantages qu'elle est susceptible de procurer :

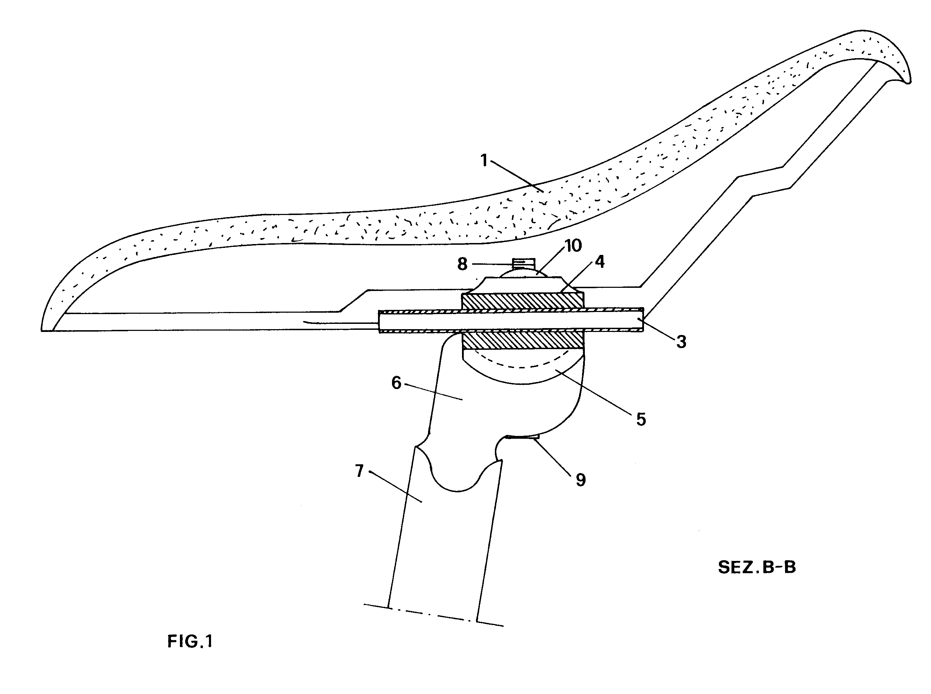

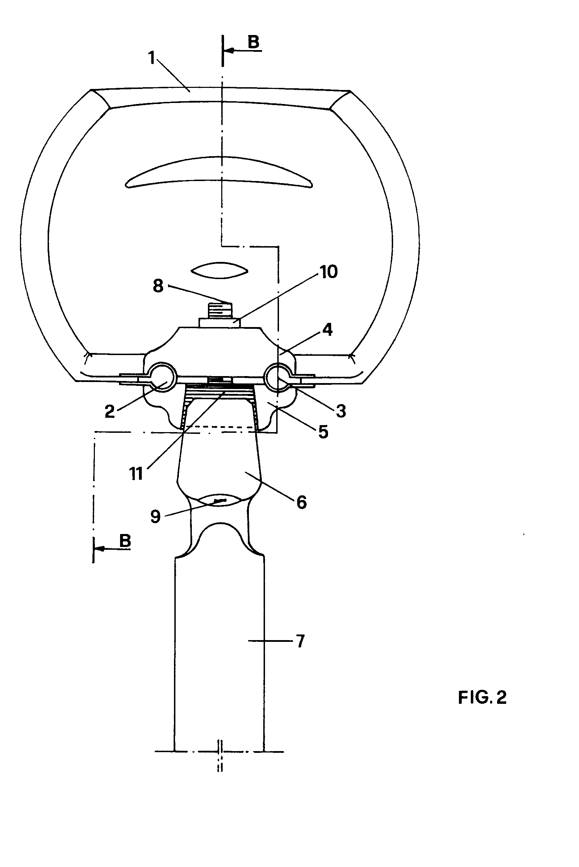

Fig. 1 est une coupe longitudinale d'une selle conforme à l'invention, suivant le plan indiqué en B-B en fig. 2.
Fig. 2 en est une vue en élévation par l'arrière. Comme on peut le voir sur le dessin, la carcasse de la sel le 1 présente une conformation particulière qui concerne surtout sa partie inférieure, au niveau de laquelle sont prévus deux tronçons 2 et 3 à section circulaire élargie, ces tronçons s'étendant de manière rectiligne et parallèlement l'un à l'autre sur quelques centimètres. Les tronçons en cause sont susceptibles d'être aisément serrés par deux mors 4 et 5, eux-mêmes fixés à la partie supérieure profilée 6 du tube de selle 7 qui sert à la fixation de la selle sur le cadre de la bicyclette.

La vis 8, préférablement munie d'une tête 9 du type à six pans creux, est complètement noyée dans la partie profilée 6 du tube 7 et est vissée dans la pièce taraudée 10 prévue à cet effet.

Dans ces conditions, la seul manoeuvre de cette vis 8 dans la pièce 10 par action sur sa tête 9 opère le blocage, à la position choisie, des mors 4 et 5 sur la tête 6 du tube 7, ainsi que la solidarisation des tronçons 2 et 3 et des mors 4 et 5, en immobilisant de la sorte la selle.

Moyennant le desserrage de la vis 8, il est possible non seulement de faire coulisser les tronçons 2 et 3 dans le sens longitudinal entre les mors 4 et 5 en vue du réglage de la position horizontale de la sel le sur le cadre, mais également de déplacer angulairement ces mors 4 et 5 par rapport à la tête 6 pour régler l'inclinaison.

Il est avantageux de faire comporter, aux faces de contact 11 du mors inférieur 5 avec la paroi supérieure de la tête 6, des striures horizontales qui facilitent le blocage réciproque des pièces.

On comprend sans peine les avantages obtenus à l'aide de la structure qui vient d'être décrite ; la simple manoeuvre de la vis (8) permet le réglage de la position longitudinale de la selle et de l'inclinaison de celle-ci.

## Revendications

1. Selle de bicyclette, caractérisée en ce que son embase (1) est pourvue de deux tronçons inférieurs (2 et 3) établis à un profil rectiligne et présentant une section préférablement circulaire, lesquels tronçons sont engagés entre les mors (4 et 5) de la mâchoire qui supporte la sel le, tandis qu'une seule vis (8) permet le serrage des mors précités et des tronçons rectilignes de la selle dont la position longitudinale et l'orientation peuvent être réglés moyennant la seule manoeuvre de ladite vis.

2. Selle de bicyclette suivant la revendication 1, caractérisée en ce que par suite de la coopération directe des tronçons (2 et 3) et de sa carcasse et des mors (4 et 5) de la mâchoire associée au tube de selle (7), elle ne comporte pas le bâti-fourchette usuel des selles de course, ni le châssis à ressorts des selles de cyclotourisme usuelles.
